# EUROPÄISCHE PATENTSCHRIFT

(11) **EP 2 327 578 B1**
(45) Veröffentlichungstag und Bekanntmachung des Hinweises auf die Patenterteilung: **08.01.2014**
(21) Anmeldenummer: 10191776.3
(22) Anmeldetag: 18.11.2010
(51) Int. Cl.: B60J 7/12, B60J 7/16, B60J 7/14, B60J 7/185

(54) **Verdeckelement für ein Verdeck eines Cabriolet-Fahrzeugs**
Roof element for a convertible vehicle
Elément de toit pour un véhicule cabriolet

(30) Priorität: 18.11.2009 DE 102009053730
(43) Veröffentlichungstag der Anmeldung: 01.06.2011
(73) Patentinhaber: Valmet Automotive Oy, 23500 Uusikaupunki (FI)
(72) Erfinder: Buschermöhle, Hermann, 40593, Bersenbrück (DE); Prenger, Rainer, 49076, Osnabrück (DE); Schramm, Holger, 49143, Bissendorf (DE); Selle, Heinrich, 32549, Bad Oeynhausen (DE); Bücker, Ralf, 49170, Hagen (DE); Ruschmeyer, Heiner, 49504, Lotte (DE)
(74) Vertreter: Kronthaler, Wolfgang N.K.

(56) Entgegenhaltungen:
- EP-A2- 1 925 482
- DE-U1- 8 909 984
- DE-U1- 20 318 074
- FR-A- 600 474
- GB-A- 236 334
- GB-A- 308 889
- GB-A- 413 467
- GB-A- 631 047
- US-A- 1 816 924

## Beschreibung

Die Erfindung betrifft ein Verdeckelement für ein Verdeck eines Cabriolet-Fahrzeugs aus der Bauteilgruppe Lenker, Dachspriegel, Dachspitze und Dachrahmen nach der im Oberbegriff des Patentanspruches 1 näher definierten Art.

Aus der Praxis sind beispielsweise mit Vollmaterial oder als Hohlprofile ausgebildete Verdeckelemente bei Verdecken von Cabriolet-Fahrzeugen bekannt. Derartige Hohlprofile sind insbesondere als Strangpressprofilbauteile ausgebildet und werden mit entsprechenden Umformvorgängen hergestellt. Weiterhin sind mit Blechen ausgebildete Verdeckelemente bekannt, wobei die Bleche zur Bildung der Verdeckelemente miteinander verschweißt, vernietet oder vergleichbar miteinander verbunden sind.

Nachteilhafterweise weisen derartig ausgebildete Verdeckelemente meist ein hohes Gewicht auf und/oder sind in der Herstellung relativ teuer.

Aus der US 1,816,924 ist ein faltbares Dach eines Kraftfahrzeugs bekannt, bei dem Elemente des Dachs, wie eine Unterstützung, Rahmen und Bögen aus Holz gebildet sind. Ferner sind aus den Druckschriften US 1,816,924, GB 631,047, GB 413,467, GB 308,889, GB 236,334 und FR 600.474 jeweils Cabriolet-Fahrzeuge mit einem einen Holzbestandteil aufweisenden Verdeckelement bekannt.

Es ist Aufgabe der vorliegenden Erfindung, ein Verdeckelement für ein Verdeck eines Cabriolet-Fahrzeugs zu schaffen, welches hinsichtlich seiner mechanischen Eigenschaften optimal an den vorgesehenen Einsatzfall anpassbar ist.

Diese Aufgabe wird mit einem Verdeckelement für ein Verdeck eines Cabriolet-Fahrzeugs nach den Merkmalen des Patentanspruches 1 gelöst.

Vorteilhafte Weiterbildungen eines Verdeckelements für ein Verdeck eines Cabriolet-Fahrzeugs nach der Erfindung ergeben sich aus den Unteransprüchen.

Die Erfindung sieht somit ein Verdeckelement für ein Verdeck eines Cabriolet-Fahrzeugs aus der Bauteilgruppe Lenker, Dachspriegel, Dachspitze und Dachrahmen vor, wobei das Verdeckelement erfindungsgemäß wenigstens einen Holzbestandteil aufweist, der wenigstens teilweise mit einem Holzbaustoff ausgebildet ist.

Mit einem erfindungsgemäßen Verdeckelement können die mechanischen Eigenschaften des Holzbestandteils vorteilhafterweise optimiert werden. Hierbei können insbesondere Werkstoffe zum Einsatz kommen, welche den Holzbestandteil hinsichtlich seiner Struktur, seiner Festigkeit oder seines Designs vorteilhaft beeinflussen und weiterbilden.

Ein erfindungsgemäßes Verdeckelement, welches sowohl bei Soft-Top-Verdecken als auch bei Hard-Top-Verdecken eingesetzt werden kann, weist gegenüber herkömmlich hergestellten Verdeckelementen ein vorteilhafterweise geringes Gewicht auf und ist kostengünstig auch in einer Serienproduktion herstellbar.

Ein Vorteil von Holz liegt in seiner leichten Zerspanbarkeit, so dass der Holzbestandteil insbesondere im Prototypenbau auf einfache Weise in automatisierten Prozessen, beispielsweise mittels CNC-Maschinen, aus einem ungeformten Rohmaterial herstellbar ist.

Neben der Leichtbauweise sind in die Holzbauteile besonders einfach Funktionen integrierbar, wobei die Holzbauteile hinsichtlich einer Korrosion unempfindlich sind und somit eine optimierte Lebensdauer aufweisen. Auch hinsichtlich eines Packages sind die Holzbauteile gegenüber herkömmlichen Bauteilen vorteilhaft.

Unter Umweltgesichtspunkten zeichnen sich erfindungsgemäße Verdeckelemente gegenüber herkömmlich hergestellten Verdeckelementen dadurch aus, dass sie regenerativ sind und aus recyclebarem Material bestehen.

Das erfindungsgemäße Verdeckelement kann dabei sämtliche Gestängeelemente des Verdecks darstellen, unter anderem auch Anbindungslenker einer Heckscheibe. Auch Verschlüsse und Lagerstellen, d. h. Hülsen und Buchsen der Bauteilgruppe aus Lenker, Dachspriegel, Dachspitze und Dachrahmen eignen sich zur Ausbildung aus oder mit einem Holzbaustoff.

Der Holzbaustoff kann grundsätzlich Holz an sich oder ein Holzwerkstoff sein, welcher durch Zerkleinern von Holz und anschließendem Zusammenfügen der Strukturelemente, gegebenenfalls bei Mischung verschiedenartiger Holzpartikelformen, mit natürlichen und synthetischen Bindemitteln und evtl. Zugabe weiterer Additive hergestellt wird.

Der Holzbestandteil kann bei einer vorteilhaften Ausbildung einen tragenden Bestandteil des Verdeckelements darstellen und die auf das Verdeckelement wirkenden Kräfte im Wesentlichen alleine aufnehmen.

Als bevorzugte Ausgangsmaterialien zur Herstellung des Holzbestandteils hat es sich erwiesen, wenn der Holzbestandteil wenigstens teilweise mit Formholz, Schichtholz oder Flüssigholz oder einem Verbund daraus ausgebildet ist.

Um das jeweilige Verdeckelement optimal auf die in seiner Gebrauchssituation auf das Verdeckelement wirkenden Belastungen einzustellen, kann bei einer vorteilhaften Ausbildung der Erfindung vorgesehen sein, dass der Holzbestandteil wenigstens ein weiteres Element aufweist. Dieses weitere Element ist dabei vorzugsweise als Metallelement ausgebildet und insbesondere mäanderförmig oder zackenförmig in oder an dem Holzbestandteil angeordnet. Mittels des weiteren Elements kann der Holzbestandteil insbesondere in Bereichen, auf die in Gebrauchssituation hohe Kräfte wirken, verstärkt werden, wobei das Metallteil hierzu beispielsweise in der Art einer Feder in Holzfaserrichtung in dem Holzbauteil angeordnet ist.

Insbesondere vorteilhaft ist es, wenn in den Holzbaustoff des Holzbestandteils wenigstens eine Faser, insbesondere eine Glasfaser, eine Kohlefaser, eine Metallfaser oder eine Prepregfaser, eingelagert ist, wobei diese sowohl geordnet als auch ungeordnet, als Einzelfilament, als Gewebe, als Gestricke und/oder Gewirke mit dem Holzbaustoff zusammenwirken können.

Eine erhöhte Festigkeit des Holzbestandteils kann bei einer einfachen Ausbildung der Erfindung erreicht werden, wenn der Holzbaustoff des Holzbestandteils einen Holz-Kunststoff-Verbundwerkstoff bildet und z. B. in eine Kunststoffmatrix eingelagert ist.

Verbesserte mechanische Eigenschaften eines erfindungsgemäßen Verdeckelements können auch dadurch erreicht werden, dass der Holzbaustoff des Holzbestandteils wenigstens bereichsweise mit einem Harz, insbesondere einem Kunstharz, getränkt ist. Hierbei könnte beispielsweise ein Lenker des Verdecks aus einem Vollholz gefertigt und anschließend in Kunstharz getränkt werden. Eine Faserstruktur des Holzes, welche für die Stabilität des Holzbestandteils wichtig ist, bleibt dabei vorteilhafterweise erhalten.

Insbesondere um eine Wasseraufnahme durch den Holzbestandteil zu vermeiden und eine Geruchsabgabe des Holzbestandteils zu dämmen, kann der Holzbestandteil bei einer vorteilhaften Weiterbildung der Erfindung wenigstens teilweise, insbesondere vollständig ummantelt sein.

Besonders einfach ist eine derartige Ummantelung herstellbar, wenn der Holzbestandteil mit einem Kunststoff ummantelt ist, da eine derartige Ummantelung auf besonders effektive Weise wasserabweisend ist.

Um eine Anbindung von anderen Bauteilen an das erfindungsgemäße Verdeckelement zu erleichtern, kann es bei einer Weiterbildung der Erfindung vorgesehen sein, dass an dem Holzbestandteil Anbindungsstellen für andere Bauteile vorgesehen sind. Diese Anbindungsstellen, welche beispielsweise als Gewinde oder Bohrungen ausgebildet sein können, sind auf einfache Weise herstellbar.

Zur Anbindung des Holzbestandteils an weitere Bauteile kann es vorgesehen sein, dass an dem Holzbestandteil Lagerstellen für das Verdeckelement vorgesehen sind, mittels denen das Verdeckelement beispielsweise gelenkig oder fest an den weiteren Bauteilen anordenbar ist. Ebenso wie Anbindungsstellen sind auch Lagerstellen durch die einfache Zerspanbarkeit des Holzbestandteils sehr einfach und damit auch kostengünstig herstellbar.

Eine weiter erhöhte Stabilität des Verdeckelements kann bei einer vorteilhaften Ausbildung der Erfindung erreicht werden, indem eine Faserstruktur des Holzbestandteils im Wesentlichen entlang einer Hauptbelastungsrichtung des Verdeckelements in seiner Gebrauchsposition ausgerichtet ist.

Besonders kostengünstig kann ein erfindungsgemäßes Verdeckelement hergestellt werden, wenn der Holzbestandteil mittels eines Strangpressens oder eines Spritzgießens hergestellt ist. Derartig hergestellte Verdeckelemente eignen sich insbesondere zum Einsatz für eine Serienherstellung. Da bei einer Herstellung von Verdeckelementen aus Holzbaustoffen mittels Spritzgießens bereits eine niedrigere Temperatur als bei einer Herstellung von Verdeckelementen aus Metallen, insbesondere Aluminium oder Magnesium, mittels Spritzgießens ausreichend ist, ist der Produktionsprozess eines erfindungsgemäß hergestellten Verdeckelements zudem vorteilhafterweise günstig.

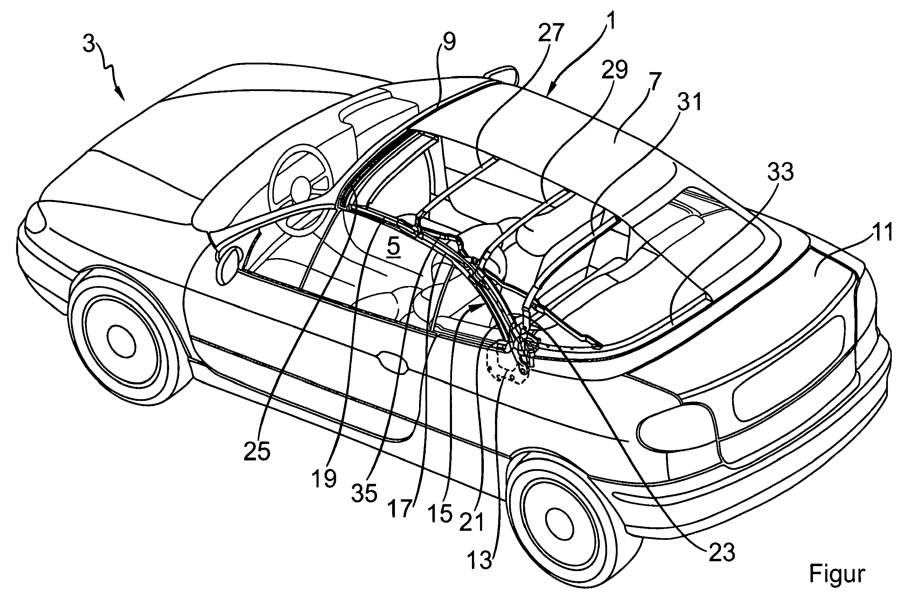

Weitere Vorteile und vorteilhafte Ausführungen eines Verdeckelements nach der Erfindung ergeben sich aus der Zeichnung und der Beschreibung.

Nachfolgend ist ein vorteilhaftes Ausführungsbeispiel eines erfindungsgemäßen Verdeckelements anhand der Zeichnung prinzipmäßig beschrieben.

Die einzige Figur der Zeichnung zeigt eine vereinfachte perspektivische Ansicht eines Verdecks eines Cabriolet-Fahrzeugs mit mehreren einen Holzbestandteil aufweisenden Verdeckelementen.

Das in der Figur der Zeichnung dargestellte, als Soft-Top-Verdeck 1 ausgebildete Verdeck eines Cabriolet-Fahrzeugs 3 ist in einer geschlossenen Position gezeigt, wobei das mit einem flexiblen Verdeckbezug 7 ausgebildete Verdeck 3 zwischen der einen Fahrgastraum 5 überdeckenden geschlossenen Position und einer den Fahrgastraum 5 freigebenden offenen Position überführt werden kann. In der dargestellten geschlossenen Position erstreckt sich das Verdeck 3 von seiner fahrzeugfrontseitigen Anordnung an einem Windschutzscheibenrahmen 9 bis zu seiner fahrzeugheckseitigen Anordnung an einem Heckdeckel 11.

Das Verdeck 3 ist mittels eines Verdeckgestänges 15 an einem Hauptlager 13 angeordnet, wobei das Verdeckgestänge 15 mit symmetrisch zu einer Fahrzeuglängsachse angeordneten Seitenrahmenelementen 17, 19 des Verdeckgestänges 15 ausgebildet ist. Ein hinteres Seitenrahmenelement 17 ist dabei einenends über eine Hauptsäule 21 und einen Hauptlenker 23 schwenkbeweglich an dem Hauptlager 13 abgestützt und andernends gelenkig mit den vorderen Seitenrahmenelementen 19 verbunden.

Die vorderen Seitenrahmenelemente 19 sind in einem fahrzeugfrontseitigen Bereich über eine in der dargestellten Schließstellung an dem Windschutzscheibenrahmen 9 festlegbare Dachspitze 25 verbunden. Heckwärts davon sind die Seitenrahmenelemente 17, 19 über jeweils in Fahrzeugquerrichtung verlaufende Dachspriegel 27, 29, 31 miteinander verbunden.

Ebenfalls an dem Hauptlager 13 angelenkt ist ein Spannbügel 33, welcher in der dargestellten geschlossenen Position des Verdecks 1 dazu vorgesehen ist, den flexiblen Verdeckbezug 7 in einer gespannten Position zu halten.

Bei dem vorliegenden Ausführungsbeispiel weisen sowohl die Seitenrahmenelemente 17, 19, der Hauptlenker 23, die Dachspitze 25, sowie Lenker 35 des Verdeckgestänges 15 jeweils einen Holzbestandteil auf, welcher mit einem Holzbaustoff ausgebildet und in einem Spritzgießverfahren hergestellt ist. Der Spannbügel 33 sowie die Dachspriegel 27, 29, 31 sind vorliegend aus einem metallischen Grundstoff gefertigt.

Die mit einem Holzbaustoff ausgebildeten Verdeckelemente 17, 19, 23, 25, 35 sind vorliegend aus Flüssigholz gebildet, welches mit einem Kunstharz getränkt ist. Holzfasern des Holzbestandteils sind dabei jeweils derart in dem jeweiligen Verdeckelement 17, 19, 23, 25, 35 angeordnet, dass eine Faserrichtung in Richtung einer Hauptbelastungsrichtung des jeweiligen Verdeckelements 17, 19, 23, 25, 35 zeigt, so dass das Verdeckelement 17, 19, 23, 25, 35 den jeweiligen Belastungen standhält.

Um eine Wasseraufnahme durch den jeweiligen Holzbestandteil zu verhindern, ist der Holzbestandteil vorliegend jeweils von einem Kunststoff vollständig ummantelt. Hierdurch wird auch eine Geruchsausbreitung durch den Holzbaustoff verhindert.

Die Verdeckelemente 17, 19, 23, 25, 35 weisen entsprechend herkömmlich ausgebildeten Verdeckelementen jeweils Anbindungsstellen zur Anbindung weiterer Bauteile an das jeweilige Verdeckelement 17, 19, 23, 25, 35 und Lagerstellen auf, mittels denen die Verdeckelemente 17, 19, 23, 25, 35 mit weiteren Bauteilen verbunden sind.

## Patentansprüche

1. Verdeckelement für ein Verdeck (1) eines Cabriolet-Fahrzeugs (3) aus der Bauteilgruppe Lenker (23, 35), Dachspriegel (27, 29, 31), Dachspitze (25) und Dachrahmen (17, 19), wobei das Verdeckelement (17, 19, 23, 25, 27, 29, 31, 35) wenigstens einen Holzbestandteil aufweist, der wenigstens teilweise mit einem Holzbaustoff ausgebildet ist,
**dadurch gekennzeichnet,**
**dass** der Holzbestandteil mit einem Verbundmaterial ausgebildet ist, welches den Holzbaustoff und wenigstens einen weiteren Werkstoff aufweist.

2. Verdeckelement nach Anspruch 1,
**dadurch gekennzeichnet,**
**dass** der Holzbestandteil wenigstens teilweise mit Formholz, Flüssigholz oder Schichtholz oder einem Verbund daraus ausgebildet ist.

3. Verdeckelement nach einem der Ansprüche 1 oder 2,
**dadurch gekennzeichnet,**
**dass** der Holzbestandteil wenigstens ein weiteres Element aufweist.

4. Verdeckelement nach Anspruch 3,
**dadurch gekennzeichnet,**
**dass** das weitere Element als Metallelement ausgebildet ist und insbesondere mäanderförmig oder zackenförmig in oder an dem Holzbestandteil angeordnet ist.

5. Verdeckelement nach einem der Ansprüche 1 bis 4,
**dadurch gekennzeichnet,**
**dass** in den Holzbaustoff des Holzbestandteils wenigstens eine Faser, insbesondere eine Glasfaser, eine Kohlefaser, eine Metallfaser oder eine Prepregfaser, eingelagert ist.

6. Verdeckelement nach einem der Ansprüche 1 bis 5,
**dadurch gekennzeichnet,**
**dass** der Holzbaustoff des Holzbestandteils in einer Kunststoffmatrix eingelagert ist.

7. Verdeckelement nach einem der Ansprüche 1 bis 6,
**dadurch gekennzeichnet,**
**dass** der Holzbaustoff des Holzbestandteils wenigstens bereichsweise mit einem Harz, insbesondere einem Kunstharz, getränkt ist.

8. Verdeckelement nach einem der Ansprüche 1 bis 7,
**dadurch gekennzeichnet,**
**dass** der Holzbestandteil wenigstens teilweise, insbesondere vollständig ummantelt ist.

9. Verdeckelement nach Anspruch 8,
**dadurch gekennzeichnet,**
**dass** der Holzbestandteil mit einem Kunststoff vollständig ummantelt ist.

10. Verdeckelement nach einem der Ansprüche 1 bis 9,
**dadurch gekennzeichnet,**
**dass** an dem Holzbestandteil Anbindungsstellen für andere Bauteile vorgesehen sind.

11. Verdeckelement nach einem der Ansprüche 1 bis 10,
**dadurch gekennzeichnet,**
**dass** an dem Holzbestandteil Lagerstellen für das Verdeckelement vorgesehen sind.

12. Verdeckelement nach einem der Ansprüche 1 bis 11,
**dadurch gekennzeichnet,**
**dass** eine Faserstruktur des Holzbestandteils im Wesentlichen entlang einer Hauptbelastungsrichtung des Verdeckelements (17, 19, 23, 25, 27, 29, 31, 35) in seiner Gebrauchsposition ausgerichtet ist.

13. Verdeckelement nach einem der Ansprüche 1 bis 12,
**dadurch gekennzeichnet,**
**dass** der Holzbestandteil mittels eines Strangpressens oder eines Spritzgießens hergestellt ist.

## Claims

1. A hood element for a hood (1) of a convertible vehicle (3), which is a component of the assembly consisting of links (23, 35), roof bows (27, 29, 31), a roof header (25), and roof frames (17, 19), said hood element (17, 19, 23, 25, 27, 29, 31, 35) comprising at least one wooden component which is made at least partly from a wooden material,
**characterised in that**
the wooden component is formed with a composite material comprising the wooden material and at least one other material.

2. The hood element according to claim 1, **characterised in that** the wooden component is formed at least partly using moulded wood, liquid wood or laminated wood, or a composite thereof.

3. The hood element according to any one of claims 1 or 2, **characterised in that** the wooden component comprises at least one further element.

4. The hood element according to claim 3, **characterised in that** said further element is provided as a metal element and is arranged in or on the wooden component, in particular in a meandering or serrated shape.

5. The hood element according to any one of claims 1 to 4, **characterised in that** at least one fibre, in particular a glass fibre, a carbon fibre, a metal fibre or a pre-preg fibre, is embedded in the wooden material of the wooden component.

6. The hood element according to any one of claims 1 to 5, **characterised in that** the wooden material of the wooden component is embedded in a plastic matrix.

7. The hood element according to any one of claims 1 to 6, **characterised in that** the wooden material of the wooden component is impregnated at least partly with a resin, in particular a plastic resin.

8. The hood element according to any one of claims 1 to 7, **characterised in that** the wooden component is at least partly, in particular completely, clad.

9. The hood element according to claim 8, **characterised in that** the wooden component is completely clad with a plastic material.

10. The hood element according to any one of claims 1 to 9, **characterised in that** the wooden component is provided with connecting points for other parts.

11. The hood element according to any one of claims 1 to 10, **characterised in that** the wooden component is provided with points of support for the hood element.

12. The hood element according to any one of claims 1 to 11, **characterised in that** a fibre structure of the wooden component is oriented substantially along a main load direction of the hood element (17, 19, 23, 25, 27, 29, 31, 35) in its position of use.

13. The hood element according to any one of claims 1 to 12, **characterised in that** the wooden component is manufactured by means of extrusion or injection moulding.

## Revendications

1. Elément de capote pour une capote (1) d'un véhicule cabriolet (3), lequel élément de capote est un composant de l'ensemble constitué par des bielles (23, 35), des arceaux de toit (27, 29, 31), un sommet de toit (25), et des cadres de toit (17, 19), ledit élément de capote (17, 19, 23, 25, 27, 29, 31, 35) présentant au moins un composant en bois réalisé au moins partiellement à partir d'un matériau à base de bois,
**caractérisé en ce que**
le composant en bois est réalisé à partir d'un matériau composite qui comprend ledit matériau à base de bois et au moins un autre matériau.

2. Elément de capote selon la revendication 1, **caractérisé en ce que** le composant en bois est réalisé au moins partiellement à partir du bois façonné, du bois liquide ou du bois lamellé, ou d'un matériau composite de ceux-ci.

3. Elément de capote selon l'une quelconque des revendications 1 ou 2, **caractérisé en ce que** le composant en bois comprend au moins un élément additionnel.

4. Elément de capote selon la revendication 3, **caractérisé en ce que** ledit élément additionnel est réalisé sous forme d'un élément métallique et est disposé, notamment en forme de méandre ou en pointe, dans ou sur ledit composant en bois.

5. Elément de capote selon l'une quelconque des revendications 1 à 4, **caractérisé en ce qu'**au moins une fibre, notamment une fibre de verre, une fibre de carbone, une fibre métallique ou une fibre pré-imprégnée, est noyée dans le matériau à base de bois du composant en bois.

6. Elément de capote selon l'une quelconque des revendications 1 à 5, **caractérisé en ce que** le matériau à base de bois du composant en bois est noyé dans une matrice en matière plastique.

7. Elément de capote selon l'une quelconque des revendications 1 à 6, **caractérisé en ce que** le matériau à base de bois du composant en bois est imprégné au moins partiellement d'une résine, notamment d'une résine plastique.

8. Elément de capote selon l'une quelconque des revendications 1 à 7, **caractérisé en ce que** le composant en bois est enrobé au moins partiellement, notamment entièrement.

9. Elément de capote selon la revendication 8, **caractérisé en ce que** le composant en bois est enrobé entièrement d'une matière plastique.

10. Elément de capote selon l'une quelconque des revendications 1 à 9, **caractérisé en ce que** l'on prévoit sur le composant en bois des points de liaison pour d'autres composants.

11. Elément de capote selon l'une quelconque des revendications 1 à 10, **caractérisé en ce que** l'on prévoit sur le composant en bois des points de support pour l'élément de capote.

12. Elément de capote selon l'une quelconque des revendications 1 à 11, **caractérisé en ce qu'**une structure fibreuse du composant en bois est orientée sensiblement selon une direction de contrainte principale de l'élément de capote (17, 19, 23, 25, 27, 29, 31, 35) dans sa position d'utilisation.

13. Elément de capote selon l'une quelconque des revendications 1 à 12, **caractérisé en ce que** le composant en bois est produit en effectuant un moulage par extrusion ou un moulage par injection.
